Europäisches Patentamt

European Patent Office

Office européen des brevets

(19)

(11) **EP 1 010 975 A1**

(12) **EUROPEAN PATENT APPLICATION**

(43) Date of publication:
21.06.2000 Bulletin 2000/25

(51) Int Cl.⁷: **G01N 21/59**, B41J 2/195

(21) Application number: 99309514.0

(22) Date of filing: 29.11.1999

| | |
|---|---|
| (84) Designated Contracting States:<br>AT BE CH CY DE DK ES FI FR GB GR IE IT LI LU MC NL PT SE<br>Designated Extension States:<br>AL LT LV MK RO SI<br><br>(30) Priority: 14.12.1998 US 211035<br><br>(71) Applicant: **Scitex Digital Printing, Inc.**<br>**Dayton, Ohio 45420-4099 (US)**<br><br>(72) Inventors:<br>• **Loyd, John C.**<br>**Centerville, Ohio 45458 (US)**<br>• **Roberts, Jeffrey L.**<br>**Beavercreek, Ohio 45432 (US)** | • **Bowers, Mark C.**<br>**Ann Arbor, MI 48105 (US)**<br>• **Mullins, Randal L.**<br>**Jamestown, Ohio (US)**<br>• **Large, Timothy**<br>**Papworth Everard, Cambridge, CB3 8UQ (GB)**<br>• **King,Toby**<br>**Trumpington,Cambridge, CB2 2HT (GB)**<br>• **Sinclair, Gary**<br>**Cheveley, Cambridge, CB8 9DL (GB)**<br><br>(74) Representative: **Freed, Arthur Woolf et al**<br>**Reginald W. Barker & Co.,**<br>**Cliffords Inn**<br>**Fetter Lane**<br>**London EC4A 1BY (GB)** |

(54) **Liquid concentration optical sensor**

(57)    An improved optical concentration sensor is provided for use with continuous ink jet printers. The optical concentration sensor has an optical cell which can contain a fluid (30) to be tested, at least one light source (22) for passing light through the fluid, at least one light detector (26) for detecting light transmitted through the fluid, and electronics for monitoring a first output from the light detector and providing a second output related to concentration of the fluid. Specifically, the improvement comprises curved inner surfaces of the optical cell walls (12a,12b) for producing at least one region with a narrow gap for transmission of light through the fluid and regions with wider gaps for more efficient flow of fluid through the cell.

Fig. 2

**Description**

Technical Field

The present invention relates to optical concentration sensing devices and, more particularly, to measurement of ink concentration for control in jet fluid systems.

Background Art

In a continuous ink jet fluid system, the ink used, which includes a carrier fluid, such as water or a solvent, and dye, is continuously recirculated through the system. As it is recirculated, it mixes with air in the return lines and is maintained under vacuum in the ink reservoir. Evaporation of the carrier fluid due to the air-ink interaction increases the dye concentration of the ink which changes various fluid properties such as viscosity and surface tension. Therefore the optimal parameters used to control the ink jet printing process change as the ink concentration varies. As would be obvious to one skilled in the art, affecting ink properties such as viscosity is detrimental, since the energy required to stimulate filaments is determined partially by the viscosity of the fluid.

Proper dye concentration is essential to the stable operation of an ink jet print head. The measurement of dye concentration is used to determine the amount of replenisher needed to mix with the ink to compensate for the carrier fluid lost due to evaporation. When printing rates are high, the ink usage rate due to printing is much higher than loss rate due to evaporation, therefore the fluid system can be refilled with ink without significantly affecting the ink concentration.

Alternatively, when little or no printing is being done, the system is in an idle condition and the evaporation rate of the carrier fluid is typically higher than the amount of ink removed during printing. In this instance, then, the ink concentration level increases. A replenishment fluid is needed to bring the ink concentration level down to the proper mixture.

Maintaining ink concentration in a continuous ink jet printing system is known in the art. One prior art method for controlling the ink concentration involves counting the print drops. By knowing the number of drops printed and the typical drop size, derived from hole size, one has a measure of the amount of ink printed; the actuations of the float in the tank are used to determine the volume of fluid lost from the tank; the difference between the amount of fluid lost from the tank and the amount printed is assumed to be vehicle lost due to evaporation. Counting printed drops is open loop control with no feedback parameters. This scheme is sensitive to the accuracy of the estimated drop volume. Small holes size errors or pressure variations can produce drop volumes larger or small than assumed by the control system. Ink losses due to spillage or leakage can also not be accounted for. As a result, this scheme cannot maintain the ink concentration required for high print quality applications.

Ink concentration has also been monitored by means of the resistivity if the ink, as in patent U.S. Patent No. 3,761,953 and European Patent No. 0597628A. Resistivity control also is not precise. The resistivity of the ink is not only affected by the ionic content of the dye but also by ions from impurities in the dye stuff and the ink vehicle. Temperature also affects resistivity and calibration curves are necessary to correlate the concentration and resistivity at various temperatures. Furthermore, the resistivity of the ink also changes with time after the ink has been initially installed in the system. As a result, resistivity is less than an ideal indicator of ink concentration.

Thus, these previous methods of concentration control are indirect and do not measure a property of the ink directly linked to concentration. Absorption of light by the ink is directly tied to the concentration of ink. U.S. Patent Nos. 5,373,366 and 5,241,189 describe a method for monitoring the concentration of the ink by means of the optical absorption. Ink, being pumped to the printhead, passes through a optical cell consisting of closely spaced transparent glass walls. Light from an LED passes through the ink in the cell and is detected by a photodiode. The amount of light detected by the photodiode depends not only on the concentration of the ink but also on the thickness of the optical cell. For a highly absorbing black ink, a very thin optical cell must be used to allow sufficient light to be detected. The small gap through which the fluid must pass in the optical cell can result in unacceptably high pressure drops at the required flow rates.

To reduce the pressure drop, the width of the cell must be fairly large. The resulting large surface area of the optical plates makes the spacing of the optical plates sensitive to changes in ink pressure. As the absorption of the light in the cell varies exponentially with the spacing, the apparent concentration of the ink, as indicated by the optical absorption in the optical cell, varies with ink pressure.

The optical concentration sensor described in U.S. Patent No. 5,241,189 uses an infrared light emitting diode. Not all dyes and pigment used in inks are absorbing in the IR. As a result, the `189 patent is not applicable for use with all inks. Even with a visible light spectrum, different inks, especially different color inks, have wildly different light absorption characteristics. To provide the desired ink concentration sensitivity for the different inks, one would need to use optical cells whose thickness must be matched to the ink of choice. This is not a practical option.

Clearly, what is needed is an ink concentration sensor which can be used effectively with a broad range of inks without the need to be specially tuned for each selected ink. Furthermore, the sensor should not be sensitive to the ink pressure nor should it produce excessive pressure drops.

Summary of the Invention

It is an object of the present invention to provide an optical concentration sensor capable of detecting the concentration of an ink by measuring the amount of light passing through a thin slice of ink. The electrical output of the sensor is directly proportional to the concentration.

In accordance with one aspect of the present invention, an improved optical concentration sensor is provided for use with continuous ink jet printers. The optical concentration sensor has an optical cell which can contain a fluid to be tested, at least one light source for passing light through the fluid, at least one light detector for detecting light transmitted through the fluid, and electronics for monitoring a first output from the light detector and providing a second output related to concentration of the fluid. Specifically, the improvement comprises curved inner surfaces of the optical cell walls for producing at least one region with a narrow gap for transmission of light through the fluid and regions with wider gaps for more efficient flow of fluid through the cell.

Other objects and advantages of the present invention will be apparent from the following description and the appended claims.

Brief Description of the Drawings

Fig. 1A is an exploded view of an optical concentration sensor;
Fig. 1B illustrates a section view of the assembled OCS of Fig. 1A, taken along line B-B of Fig. 1A;
Fig. 2 illustrates one embodiment of the optical cell, in accordance with the present invention; and
Fig. 3 is a block diagram of the optical concentration sensor of the present invention.

Detailed Description of the Invention

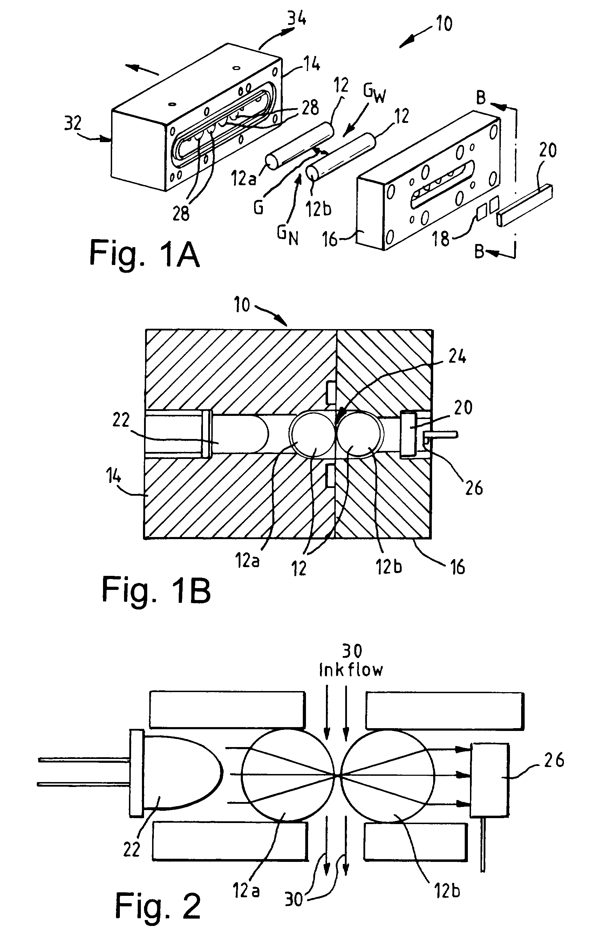

The optical concentration sensor of the present invention provides an electrical voltage output directly proportional to the concentration of the ink flowing through it, regardless of color. In prior art optical concentration sensors, the thin fluid channel required to make the optical transmission measurements produced excessive pressure drops in the fluid system. This problem is eliminated in the present invention by replacing the flat glass plate walls of the optical cell with curved walls. As shown in Fig. 2, closely spaced curved glass walls provide the desired small gap for transmitting light through the ink. Because of the curvature of the glass walls, the narrow gap quickly widens out. As a result, the pressure drop of the ink flowing through the channel is greatly reduced.

If the outer surfaces of the glass walls are also appropriately curved, the light can be focused down through the narrow gap region of the optical cell and onto the photodetector. In this way, the optical sensor can more efficiently use the light from the light source.

These two desirable functions can be met by using glass or optically transparent lenses, beads or rods for the closely spaced walls of the optical cell. An additional advantage of replacing the glass plate walls of the prior art optical cells with lenses, beads or rods is that these tend to be much stiffer than the glass walls of the optical cells in the prior art. Therefore they are much less likely to be deflected outward, and therefore to change the optical gap, in response to the pressure of the ink in the cell.

In one preferred embodiment, two glass rods 12 in plane with each other form the optical path with the gap G between them for the ink to be tested. In a preferred embodiment, the rods are sloped with respect to each other to provide different thicknesses of ink fluid for each light path. For example, the gap at the end $G_W$ can be different from the gap at the end $G_N$, illustrated in Fig. 1A, with $G_W$, for example, being 0.0012" and $G_N$, by contrast being 0.006 inches.

The ideal optical concentration sensor of the present invention is a universal device that can be used on multiple inks ranging from black to color, and provides voltage output directly proportional to the ink concentration. Inks absorb different frequencies of light depending upon their color. For instance, cyan ink absorbs yellow light, magenta absorbs green light, and yellow ink absorbs blue light. Black ink, of course, absorbs nearly all colors.

In order to detect changes in concentration of a particular color ink, the wavelengths of light which are most strongly absorbed by that ink must be monitored. The absorption rate intensity of an ink at such wavelengths strongly absorbed by an ink will change as the ink concentration changes. At wavelengths not absorbed by the ink, light will always pass through that ink at the same level no matter what the concentration. Light at these not absorbed wavelengths will produce a high background output from the photodetector, lowering the sensitivity of the system to changes in ink concentration. Thus, to get maximum sensitivity to changes in ink concentration, only light with wavelengths that are highly absorbed by the ink should be used in the optical concentration sensor.

Therefore, to monitor the concentration of a variety of inks and colors, the optical concentration sensor according to the present invention is equipped with four sources of light: red, amber, green, and blue LEDs. If cyan ink concentration is being monitored, the amber LED is employed; if magenta, the green; and if yellow, the blue. For black ink, a red LED is used, although other color sources would also be acceptable. It has been found that LED's (notably orange and yellow) emit infrared light in addition to their visible light. To prevent this undesired IR emission from being detected, suitable suppression means, such as KG5 Schott glass filters, may be used in the optical path. These filters give optimum suppression of the IR while being quite transparent in the visible. In addition to filtering out the IR emissions, color gelatin filters are employed for the green and blue light paths to narrow the band of frequencies which reach the detectors to those that are most readily absorbed by the magenta and yellow inks, respectively. The intent is to enhance the sensitivity to changes in concentration for these inks. By choosing the light sources in this way to match the emission spectra of the light source with the high absorption region of the spectra for each ink, the maximum sensitivity to concentration for each color and type of ink can be obtained.

In addition to this preferred embodiment which uses different colored LED's with IR filters, it is also possible to employ a white light with appropriate filters or in combination with spectrally sensitive detectors. Alternatively, a white light could be used in combination with a prism or diffraction grating to spread out the spectrum. It would then be possible to utilize an array detector such as a CCD, or other means to detect the transmitted light in the spectral range of interest. Referring now to the drawings, an exploded view of an optical concentration sensor 10 is shown in Fig. 1A, and Fig. 1B illustrates a section view of the assembled OCS 10, taken along line B-B of Fig. 1A. The sensor 10 comprises glass rods 12, one fitting into each half 14 and 16 of the OCS 10. Light passes from LED 22 through the first rod 12a. A minimal gap 24 between the rods 12 varies from approximately 1.2 mils to 6 mils over the length of the rods, for purposes explained below. The light passes through a specified ink thickness in this gap 24 and through the second rod 12b. From there, the light passes through filters 18 and infrared filter 20, to light detectors 26. The photodiodes 26, therefore, detect the light transmitted through the thickness of ink fluid and light filters.

The optical concentration sensor of the present invention further comprises a cell housing which is a means for holding the glass rods, the light sources, the light detectors, and the light filters, in relationship to each other so that the light passes from the LED through a first optical cell wall rod, through the specified ink thickness, through a second optical cell wall rod, through the light filters and to the light detectors. The rods are bonded to either of two halves of the cell housing, each of which has cavity for the rod. One half has holes for insertion of LEDs and a light path to the rod. The other half has holes for a light path from the rod to the filters and photodetectors. The halves may be assembled together with one or more shims to set the specified thickness of ink through which the light must pass. The shims, however, may be internal, assembled between the rods or shims are external, assembled between the halves.

Because black ink is many times more absorptive than any color ink, a very thin thickness of black ink is required in comparison to color inks to pass a detectable level of light through it. Therefore, the optical concentration sensor 10 provides the gap 24 which varies along the length of the fused quartz rods. A series of four apertures 28 along the length of the sensor rods 12 provide stations at which different colored LEDs 22 are inserted. At the narrowest gap (approx. .001"-.002") red light is passed through the ink for black ink. At the widest gap (approx. .006") blue light is passed through the ink for yellow ink. Thus, the sensor 10 is configured in such a way that an appropriate gap is associated with a particular color LED. Depending on the color of ink in the sensor, the proper LED must be turned on to allow regulation of the concentration of that color.

The ink gap 24 between the rods 12a and 12b may be set using shims to space the halves appropriately. The rods 12 are fixed in each half 14 and 16 such that there is no gap between the rods when the halves are assembled together without shims. Then shims are installed to provide the gaps required at the red LED for black ink and at the blue LED for yellow ink. For example, 0.001" shims may be used for the red LED gap and a 0.005" shim for the blue LED.

An alternative embodiment, rather than employing a tapered gap between the glass rods, uses two pairs of glass rods. For example, the first pair of rods would be closely spaced to provide the small gap required for black ink. The second pair of rods would have a large gap appropriate for use with color inks. These two pair of glass rods can be contained in one housing. It will be recognized that a functionally equivalent system can be produced using multiple rods, for example three rods, where a longer rod is paired with two rods. One pairing would have a small gap and the other pairing a larger gap.

In addition, the optical concentration sensor of the present invention comprises means for sealing the sensor from leaking fluid. The rods are sealed with the epoxy used to bond the rods to the halves. The halves are sealed by means of an o-ring.

Finally, the optical concentration sensor of the present invention comprises means for allowing ink to continuously flow through the optical concentration sensor. This can be accomplished by any suitable means, such as, for example, threaded inlet and outlet ports connected to the cavity for the rod in one of halves, whereby ink flows parallel to the rods from inlet to outlet. Alternatively, a threaded inlet port can be on one half, and the outlet port on the other half, whereby ink flows across the rods through the gap between the rods. That is, flow is perpendicular to the axis of the rods.

Referring now to Fig. 2, there is illustrated one embodiment of the optical cell 10. In that embodiment fluid flow 30 is perpendicular to the axis of the glass rods 12. In Fig. 2, the ink flow is perpendicular in the direction of arrows 30, between the two glass rods 12. Epoxy seals around the glass rods prevent the ink from flowing into the space by the LED 22 or photodetectors 26. Inlet and outlet ports are indicated by arrows 32 and 34, respectively. Flow parallel to the rods reduces the risk of air bubbles being trapped between the glass rods, which would produce incorrect concentration readings. Flow parallel to the glass rods also reduces the size of the inlet and outlet plenums. With flow perpendicular to the glass rods, fairly large plenums are required to get uniform flow across the length of the glass rods. Without such plenums, there could be stagnant zones with minimal ink flow present. Optical sensors located near these stagnant zones could have trouble tracking changes in the ink concentration.

In one preferred application of the optical concentration sensor, ink is pumped through the sensor by a small dedicated ink pump. The use of a separate pump for the concentration sensor is advantageous in that it allows the flow rate through the sensor to be optimized for best sensor stability, and the pressure to the concentration sensor can be maintained even if the ink pressure to the printhead must be changed.

The optical concentration sensor further comprises means for powering the light sources and means for conditioning the output of the light detectors to be directly proportional to the ink concentration. The light transmitted through a given thickness of ink is exponentially related to the absorptivity (a function of the dye characteristics and the concentration of the dye) and the thickness of the ink. That is

$$Loss = \frac{light_{out}}{light_{in}} = e^{-A*C*t}$$

where A is a constant and C is the concentration and t is the path length in the ink. The output of the photodetector will therefore vary exponentially with concentration. A logarithmic amplifier is used to produce an output which varies linearly with concentration. In addition to providing a linear relationship to concentration, the logarithmic amplifier increases the dynamic range of the concentration sensor allowing it to work more effectively over a wider range of concentrations and ink absorption levels.

Logarithmic amplifiers, which use diodes or transistors as the feedback element across an op amp, are intrinsically quite temperature dependent. It is necessary to use a temperature correction or compensation system. One preferred means to do this is to use a matching logarithmic amplifier to amplify a reference signal. By subtracting off this logarithmic reference signal from the logarithmically amplified detector output, most of the temperature dependence can be removed.

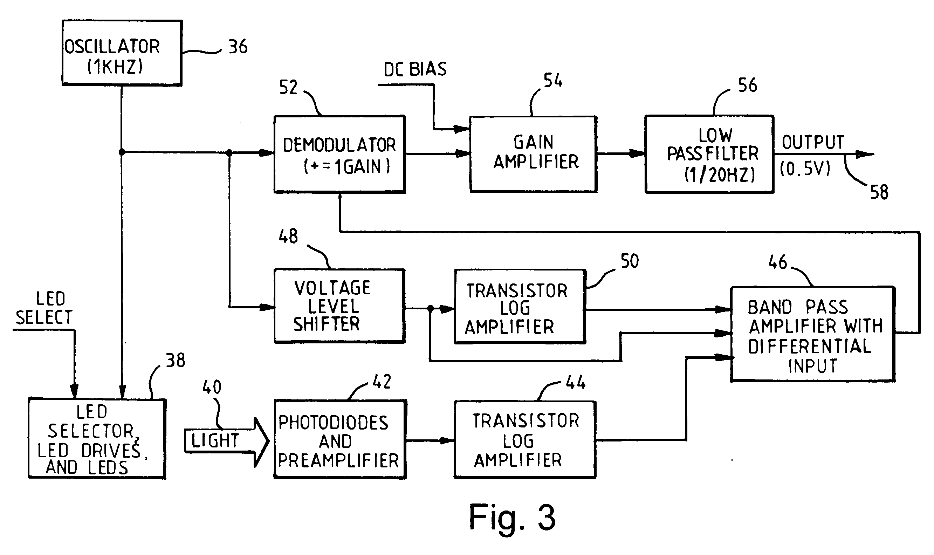

Fig. 3 shows the block diagram for the OCS electronics. As was described in U.S. Patent No. 5,373,366, totally incorporated herein by reference, the LED's are driven by a square wave signal from an oscillator 36. As each color ink requires a different LED, LED selector means into block 38 are used to drive the desired LED. The light 40 passing through the optical cell is detected by the photodiodes at block 42. The output is then amplified by a pre-filter and then by the logarithmic amplifier at block 44. The output of the log amplifier then goes to a band pass filter with differential inputs at block 46.

The oscillator 36 output pulse wave shape is converted by a voltage level shifter 48 to create a square wave with an average voltage of 0 VDC at. The signal is also phase shifted to match the phase shift produced in the optical path. This square wave is connected to the reference transistor log amplifier at block 50 which has been made to match the signal log amplifier. The circuit parameters have been adjusted to produce a log reference signal. Because the reference square wave is substantially constant with temperature, the log reference signal will have temperature dependence produced only by the log amplifier.

The output from the reference log amplifier is subtracted from the signal log amplifier output in the next circuit stage. This provides the basic temperature compensation of the OCS. An additional signal is added to the subtraction process to null out the constant component.

The resulting signal is then demodulated at block 52 for its 1kHz component in the next stage. The demodulator is a ±1 gain circuit which has its gain controlled by the logic level value of the signal from oscillator 36. The ±1 gain chopper circuit has superior demodulation characteristics for this application because it output product is independent of the actual levels of the oscillator signal. The demodulator shifts the 1kHz signal down to DC. After additional gain and bias voltage adjustment at block 54, the signal has a spectral (DC) component which is related to the ink concentration. A low pass filter at block 56 is used to remove unwanted AC components. The output voltage 58 is then related to the concentration of the ink, varying approximately linearly with concentration.

The use of the glass rods in the optical cell is beneficial for several reasons. First, the curvature of the glass rods provides a region with a small gap for transmitting light through the ink, while also allowing the gap to increase away from that region to allow ink to pass through the cell with a small pressure drop. Second, the rods provide significantly more rigidity than the glass plate walls used in the prior art. Third, the curvature of the outer surface of glass rods, near the LED and the photodetectors, serve to focus the light from the LED's through the narrowest section of the optical cell and onto the photodetectors. Fourth, compared with flat glass plates, the rods are less likely to produces variations in the gap due to burrs or contamination of the spacers.

In the detailed description, reference has been made to glass lenses, beads or rods. It should be understood that any suitable optically transparent material, including fused quartz or various plastics, which is compatible with the inks may be used.

The invention has been described in detail with particular reference to certain preferred embodiments thereof, but it will be understood that modifications and variations can be effected within the spirit and scope of the invention.

**Claims**

1. An improved optical concentration sensor having an optical cell which can contain within walls a fluid to be tested, at least one light source for passing light through the fluid, at least one light detector for detecting light transmitted through the fluid, and electronic means for monitoring a first output from the at least one light detector and providing a second output related to concentration of the fluid, the improvement comprising:

   curved inner surfaces of the optical cell walls;
   at least one narrow region with a narrow gap for transmission of light through the fluid, the at least one narrow region being produced by the curved inner surfaces;
   at least one wide region with a wider gap for more efficient flow of fluid through the cell, the at least one wide region being produced by the curved inner surfaces.

2. An improved optical concentration sensor as claimed in claim 1 further comprising focusing means to focus light from the at least one light source through the fluid and onto the at least one light detector.

3. An improved optical concentration sensor as claimed in claim 1 further comprising means for measuring concentration of the fluid using a selected portion of a color spectrum appropriate for the fluid being tested.

4. A process for generating images which comprises incorporating into an ink jet printer having associated printheads the optical concentration sensor of claim 1, whereby the printer comprises means for self-calibrating the optical concentration sensor.

5. A process as claimed in claim 4 wherein the printer further comprises means for monitoring fluid concentration independent of flow of fluid to the printheads.

6. An optical concentration sensor for measuring the concentrations of different inks comprising:

   an optical cell which can contain within walls an ink to be tested;
   at least one light source for passing light through the ink;
   at least one light detector for detecting light transmitted through the ink; and
   means for measuring the concentration of the ink in the optical cell using a selected portion of a color spectrum appropriate for the ink being tested.

7. An optical concentration sensor as claimed in claim 6 further comprising means for measuring concentration of the fluid using a selected portion of a color spectrum appropriate for the fluid being tested.

8. An optical concentration sensor for an ink jet printer, comprising:

   an optical cell which can contain within walls a fluid to be tested;
   at least one light source for passing light through the fluid;
   at least one light detector for detecting light transmitted through the fluid; and
   a logarithmic amplifier to produce an output which varies linearly with concentration.

9. An optical concentration sensor for an ink jet printer as claimed in claim 8 further comprising curved inner surfaces of the optical cell walls.

10. A process for generating images which comprises incorporating into an ink jet printer having associated printheads the optical concentration sensor of claim 8, whereby the printer comprises means for self-calibrating the optical concentration sensor.

Fig. 1A

Fig. 1B

30
Ink flow

Fig. 2

Fig. 3

EP 1 010 975 A1

**European Patent Office**

## PARTIAL EUROPEAN SEARCH REPORT

Application Number

which under Rule 45 of the European Patent Convention
shall be considered, for the purposes of subsequent
proceedings, as the European search report

EP 99 30 9514

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,D | US 5 241 189 A (VANDAGRIFF RANDY D ET AL) 31 August 1993 (1993-08-31) | 6,7 | G01N21/59 B41J2/195 |
| Y | * column 3, line 12 - line 34; figure 2 * | 1-3 | |
| Y | US 5 696 592 A (KUAN CHING FU) 9 December 1997 (1997-12-09) * column 1, line 6 - line 10 * * column 1, line 12 - line 23 * * column 2, line 30 - line 54; figure 2 * | 1-3,9 | |
| X | GB 2 065 878 A (DU PONT) 1 July 1981 (1981-07-01) | 8 | |
| Y | * page 1, line 5 - line 8 * * page 1, line 61 - line 69 * * page 3, line 3 - line 32 * | 9 | |
| A | PATENT ABSTRACTS OF JAPAN vol. 008, no. 228 (P-308), 19 October 1984 (1984-10-19) & JP 59 107241 A (MITSUBISHI DENKI KK), 21 June 1984 (1984-06-21) * abstract * | 1 | TECHNICAL FIELDS SEARCHED (Int.Cl.7) G01N B41J |

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| BERLIN | 23 March 2000 | Navas Montero, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

**European Patent Office**

**INCOMPLETE SEARCH
SHEET C**

Application Number

EP 99 30 9514

Claim(s) searched completely:
    1-3 6-9

Claim(s) not searched:
    4 5 10

Reason for the limitation of the search:

In relation to claims 4, 5, and 10, a lack of clarity within the meaning of Article 84 EPC arises to such an extent as to render a meaningful search of the claims impossible. Claim 4 purports to be a process for generating images but the subject matter of this claim is defined solely in terms of apparatus features. Therefore the subject matter of the claim is not clearly defined. Since claim 5 is dependent on claim 4, its subject matter remains also unclear. The same problem arises for claim 10.
Consequently, the search has been carried out for those parts of the application which do appear to be clear, namely claims 1 to 3, and 6 to 9.

## ANNEX TO THE EUROPEAN SEARCH REPORT
## ON EUROPEAN PATENT APPLICATION NO.

EP 99 30 9514

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2000

| Patent document cited in search report | | Publication date | Patent family member(s) | | Publication date |
|---|---|---|---|---|---|
| US 5241189 | A | 31-08-1993 | NONE | | |
| US 5696592 | A | 09-12-1997 | EP 0857965 | A | 12-08-1998 |
| GB 2065878 | A | 01-07-1981 | US 4312593 | A | 26-01-1982 |
| | | | AR 224290 | A | 13-11-1981 |
| | | | AU 6560780 | A | 25-06-1981 |
| | | | BE 886777 | A | 19-06-1981 |
| | | | BR 8008250 | A | 07-07-1981 |
| | | | CA 1144389 | A | 12-04-1983 |
| | | | DE 3048153 | A | 03-09-1981 |
| | | | ES 498015 | D | 01-06-1982 |
| | | | ES 8205314 | A | 16-09-1982 |
| | | | FR 2472184 | A | 26-06-1981 |
| | | | IT 1134835 | B | 20-08-1986 |
| | | | JP 56098640 | A | 08-08-1981 |
| | | | NL 8006918 | A | 16-07-1981 |
| | | | PT 72250 | A,B | 01-01-1981 |
| | | | SE 8008990 | A | 22-06-1981 |
| JP 59107241 | A | 21-06-1984 | JP 1509771 | C | 26-07-1989 |
| | | | JP 63060857 | B | 25-11-1988 |

EPO FORM P0459

For more details about this annex : see Official Journal of the European Patent Office, No. 12/82